Europäisches Patentamt

(19) European Patent Office

Office européen des brevets

(11) Publication number: **0 005 628**
**A2**

(12) **EUROPEAN PATENT APPLICATION**

(21) Application number: 79300851.7

(22) Date of filing: 16.05.79

(51) Int. Cl.²: **A 47 J 17/18**
**A 23 N 7/02**

(30) Priority: 16.05.78 GB 1987978

(43) Date of publication of application:
28.11.79 Bulletin 79/24

(84) Designated Contracting States:
AT BE CH DE GB NL SE

(71) Applicant: Klein, Myer Michael
27 Goldsmith Close
Coles Crescent South Harrow Middlesex(GB)

(72) Inventor: Klein, Myer Michael
27 Goldsmith Close
Coles Crescent South Harrow Middlesex(GB)

(74) Representative: Jones, Ian et al,
POLLAK MERCER & TENCH High Holborn House 52-54
High Holborn
London WC1V 6RY(GB)

(54) Vegetable peeler.

(57) A potato peeling machine has a container for receiving potatoes on an abrasive rotary floor. Vanes are attached to the underneath of the floor and are driven unidirectionally by water fed into the container through a permanently-attached hose connectable to a mains water tap. The machine has a lid that is placed on to the container and rotated into a locked position. The direction of rotation of the lid is the same as that of flow of the water within the container, so as to enhance the locking.

FIG.1.

EP 0 005 628 A2

Croydon Printing Company Ltd.

-1-

# DESCRIPTION
## VEGETABLE PEELER

This invention relates to machines for peeling potatoes and other vegetables.

One known machine comprises a bowl-shaped container having an abrasive inner surface for receiving the vegetables, and a lid placed thereover. The floor of the container is arranged to rotate by a water impeller attached therebeneath, fed from a detachable hose for connection to a water tap. The water rises past the rotating floor and aids in the peeling process produced by contact of the vegetables with each other and with the abrasive surface, providing a washing action at the same time.

This known potato and other vegetable peeling machine, however, suffers from many disadvantages. The lid tends to be a loose fit, allowing the circulating water in the bowl to leak out between the bowl and lid. The bowl is made of polystyrene and easily damaged and the action of the potatoes rotating in the bowl is noisy. The hose to the water tap is demountable from the bowl and may thus become a looser fit by prolonged use. Furthermore, the tap-end of the hose is tapered so as to be cut at the correct diameter to fit a particular water tap, thereby spoiling it for use with a tap of other diameter. In addition, the bearings in which the rotary floor is mounted are exposed to the water flowing through the machine.

It is an object of the present invention to overcome or at least alleviate some or all of the above-mentioned disadvantages.

In accordance with one aspect of the invention, there is provided a machine for peeling potatoes and other vegetables, comprising a container for receiving the potatoes and other vegetables to be peeled, a lid therefor, and means for directing water into the container so as to be

0005628

- 2 -

circulated therewithin, characterised in that the lid is secured to the container by bayonet-attachment means, closure of which is arranged to be enhanced by said water circulation.

Preferably the bayonet-attachment means comprises four spaced lateral projections on one of said container lid, and four correspondingly-spaced cut-out portions on the other of said container and lid for receiving respective ones of the projections.

In another aspect, the invention provides a potato and vegetable peeling machine having a non-toxic hose for connection to a water tap for the supply of water to a container thereof, wherein at one end the hose is permanently attached to the container, and at its other end the non-toxic hose is arranged so as to be a push fit over water taps of a range of diameters.

The said other end of the hose is conveniently expandable so as to push fit over taps of diameters of half an inch to one inch.

In a further aspect, the invention provides a machine for peeling potatoes and other vegetables comprising a container for the vegetables, a rotary member providing the inner floor of the container, the rotary member being mounted by a shaft in a bearing housing, the bearing housing providing a splashproof seal for the bearing thereof.

Preferably a peeling machine in accordance with the invention comprises a container made of polypropylene. The lid is made of material which is stronger than that of the known machine and which also gives rise to a quieter operation.

A machine for peeling potatoes and other vegetables, in accordance with the present invention will now be described, by way of example, with reference to the accompanying drawing, in which

Figure 1 is a perspective view of a lid and part of a container of the peeler, showing the bayonet-attachment means; and

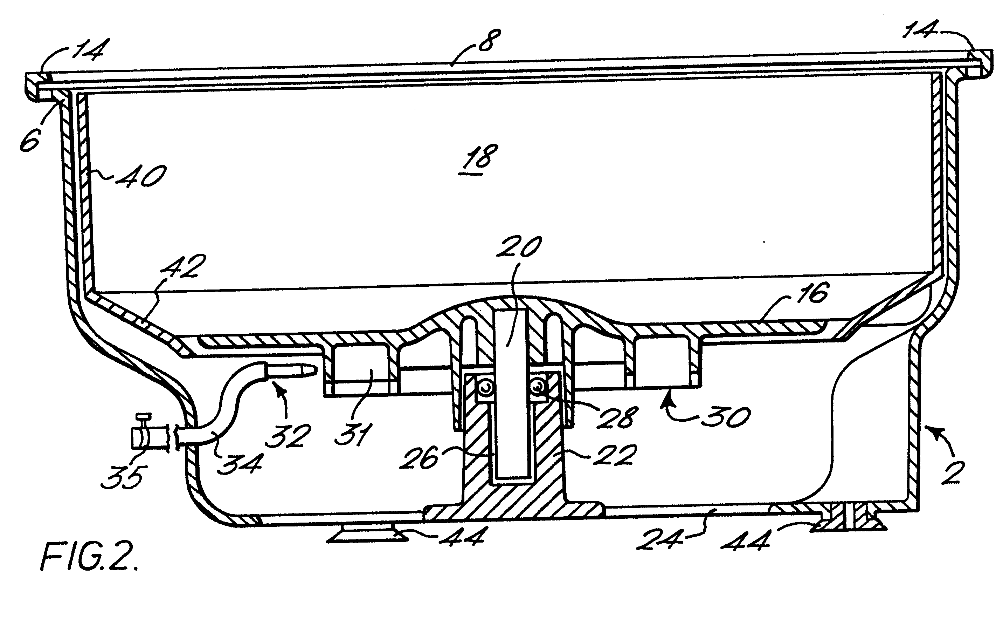

Figure 2 is a sectional elevation of the container of Figure 1.

Referring to the drawings, the peeling machine comprises a cylindrical main body or container 2 and a hemispherical lid 4. The lid 4 is provided as a tight seal on the container 2, and to this end, the container 2 is provided with an internal annular step 6 towards its open rim 8, so as to receive a circular flange 10 of the lid 4. The flange 10 of the lid 4 has four equi-spaced cut-out portions 12 (only three being shown), and the rim 8 of the container 2 has four equi-spaced inwardly-extending projections 14. The cut-outs 12 and the projections 14 cooperate with each other, such that when the lid 4 is placed onto the container 2, the cut-outs 12 pass down over the projections 14 and then, on rotation of the lid 4, the flange 10 passes beneath the projections 14 and is secured therebeneath in tight-fit abutment against the step 6. Thus, a secure seal is provided between the lid 4 and the container 2.

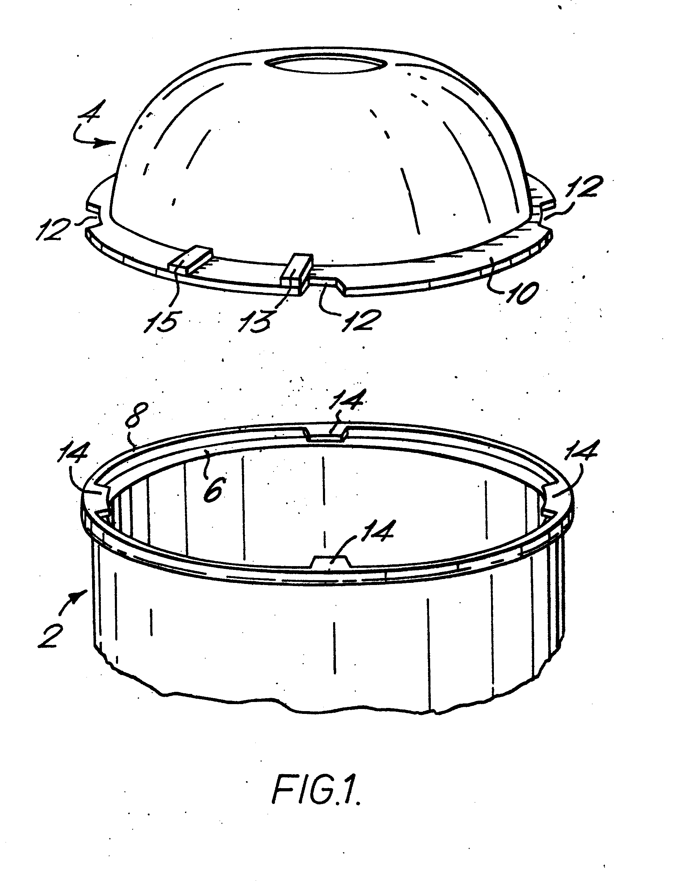

The lid 4 is provided with at least one pair of stops 13, 15 on the upper surface of the flange 10, the stop 13 being adjacent one of the cut-outs 12, and the stop 15 being circumferentially spaced therefrom. The height of the stops 13, 15 above the flange 10 is such that when the flange 10 seats on the step 6 and the lid 4 is rotated, the stops abut respective ones of the projections 14 to define open and closed positions of the lid on the container. Furthermore, it is seen that the proximity of the stop 13 to one of the cut-outs 12, and thus to a corresponding projection 14 when the lid is mounted on the container, ensures that the lid can be locked by rotation in one direction only (clockwise as viewed in Figure 1). The importance of this is described hereinafter.

The container 2 has a substantially cylindrical liner 40 demountably located therein, which has an inwardly-directed flange 42 at its lower end, and which extends upwardly to the step 6 at the rim 8. The liner 40 is supported and restrained against rotation within the container 2 by brackets projecting from the inner wall of the container, whereby projections of the liner flange 42 engage within and rest on a respective bracket.

The inner floor of the container 2 is provided by a rotary disc 16, and this and the inner wall of the liner 40 define the peeling chamber 18 of the machine. The walls defining the chamber 18 are coated with an abrasive surface, preferably of grit size 12, so as to provide the peeling action for vegetables placed therein.

The abrasive liner 40 can conveniently be withdrawn from the container body for cleaning, or for eventual replacement.

The disc 16 is mounted on a drive shaft 20, which extends downwardly therefrom and is supported by a bearing housing 22 at the base 24 of the container 2. The bearing housing 22 contains bearings 26, and also a sealing washer 28, thereby to maintain the bearing 26 free of the water that is injected into the machine, as described below.

The rotary disc 16 also has an impeller 30 comprising an annular series of vanes 31 secured thereto, so that when the impeller 30 is driven, the rotary disc 26 rotates. A roller-mounted barbel connector 32 is disposed within the container 2 beneath the disc 16, and a water hose 34 is permanently attached thereto, and passes out through the container sidewall. The free end of the hose 34 is provided as a push fit onto a tap and secured by a screw connector 35, whereby water flowing therefrom through the hose 34 and the connector 32 is directed unidirectionally to the impeller 30. In addition to driving the impeller 30, the incoming water is also thrown up around the rotary disc 16 and into the peeling chamber 18, thereby to assist in the peeling process.

The free end of the hosepipe 34 is arranged to be sufficiently flexible so as to provide a tight push fit onto water taps of diameter between ½" and 1".

The container 2 is provided of a polypropylene plastics material, which has been found to be particularly durable.

The bottom 24 of the container 2 is apertured, as are its three legs 44, fitted with suction feet, so that the water and peelings can easily drain therefrom after having dropped down from the annular gap between the liner flange 42 and the rotary disc 16.

It is important to note, that in the construction of the potato and vegetable peeling machine having the rotationally-lockable lid 4 and the rotary disc 16, the flow of water into the peeling chamber 18 is arranged to be in the rotary direction which tends to urge the stop 15 of the lid 4 towards an adjacent projection 14, thereby to enhance closure.

It will be appreciated that although a peeling action is provided by the abrasive surfaces of the peeling chamber of the machine and by contact between the potatoes or other vegetables, a cleaning action is simultaniously provided.

CLAIMS

1. A machine for peeling potatoes and other vegetables, comprising a container for receiving the potatoes and other vegetables to be peeled, a lid therefor, and means for directing water into the container so as to be circulated therewithin, characterised in that the lid is secured to the container by a bayonet-attachment means, closure of which is arranged to be enhanced by said water circulation.

2. A peeling machine according to claim 1, characterised in that the bayonet-attachment means comprises four spaced lateral projections on one of said container and lid, and four correspondingly-spaced cut-out portions on the other of said container and lid for receiving respective ones of the projections.

3. A peeling machine according to claim 2 characterised in that the projections are located on the container and the cut-out portions are located in a lateral flange of the rim of the lid.

4. A peeling machine according to claim 3, characterised in that the lid is provided with stop means limiting the rotational movement of the lid with respect to the container between a first position in which the cut-out portions fit over the projections and a second position in which the projections overhang and abut the flange of the rim of the lid, the direction of rotation of the lid between the first and second positions being the direction of rotation of the water within the container.

5. A peeling machine according to any preceding claim characterised in that the inner floor of the container comprises a rotor, the underneath of which has peripheral vanes arranged to be driven by said water.

6. A peeling machine according to any preceding claim, characterised by a roller-mounted barbel within the container, to which is permanently attached one end of a non-toxic hose the other end of the hose being expandable so as to be a tight fit over water taps of a range of diameters, and having clamp means for securement thereto.

7. A peeling machine according to claim 6 characterised in that said other end of the non-toxic hose is arranged to be a tight fit over water taps of half an inch to one inch in diameter.

8. A peeling machine according to any preceding claim, characterised in that the inner floor of the container comprises a rotatably-mounted member supported by a shaft that is mounted in a bearing housing, the bearing housing being sealed against entry of water.

9. A peeling machine according to any preceding claim characterised in that the container is made from polypropylene.

FIG.1.

FIG.2.